# EUROPÄISCHE PATENTSCHRIFT

(11) **EP 1 813 562 B1**
(45) Veröffentlichungstag und Bekanntmachung des Hinweises auf die Patenterteilung: **20.04.2016**
(21) Anmeldenummer: 06026848.9
(22) Anmeldetag: 23.12.2006
(51) Int. Cl.: B65H 37/00

(54) **Verfahren und Vorrichtung zum Aufbringen einer Dichtung**
Method and device for applying a gasket
Procédé et dispositif destinés à l'application d'un joint

(30) Priorität: 26.01.2006 DE 10603960; 12.07.2006 DE 10632139
(43) Veröffentlichungstag der Anmeldung: 01.08.2007
(73) Patentinhaber: Volkswagen Aktiengesellschaft, 38440 Wolfsburg (DE)
(72) Erfinder: Meier-Maletz, Frank, 38170 Dahlum (DE); Niehues, Dieter, 38102 Braunschweig (DE); Kondek, Andreas, 38446 Wolfsburg (DE); Finster, Uwe, 38373 Süpplingen (DE); Kögel, Mike, 38173 Evessen (DE)

(56) Entgegenhaltungen:
- DE-A1- 3 607 418
- DE-A1- 10 012 744
- DE-A1- 10 342 658

## Beschreibung

Die Erfindung betrifft ein Verfahren zum Aufbringen einer Dichtung auf eine Oberfläche eines Bauteils, insbesondere auf die Oberfläche eines Karosseriebauteils gemäß des Oberbegriffs des Anspruchs 1 sowie eine Vorrichtung gemäß des Oberbegriffs des Anspruch 20.

Das Aufkleben von Dichtungsbändern oder -profilen auf Bauteilen erfolgt vielfach in der Automobilbranche, um Karosseriebauteile zu fertigen.

Vielfach werden dazu die Dichtungsbänder oder-profile in eine Art Schablone eingelegt und das zu beklebende Bauteil auf die Dichtung in der Schablone aufgedrückt. Damit können jeweils nur immer baugleiche Bauteile in einer Anlage gefertigt werden oder es muss eine Umstellung der Anlage bei einer Änderung der Bauteile erfolgen.

Die DE 36 07 418 A1 und die DE 103 42 658 A1 offenbaren Roboter geführte Anlagen, bei welchen die zu beklebende Oberfläche des Bauteils mittels eines Roboters an einer Bandaufklebevorrichtung vorbeigeführt wird. Die Bandaufklebevorrichtung enthält einen Vorrat des Dichtungsbandes oder -profils, welches über eine Führung zur Oberfläche des Bauteils geführt wird und welches mittels einer Applikationsrolle an die Oberfläche des Bauteils angedrückt wird, wobei die Applikationsrolle mitgedreht wird. Es werden selbstklebende Dichtungsbänder oder selbstklebende Dichtungsprofile verwendet, deren Klebflächen mit einem Abdeckstreifen versehen sind, der vor dem Aufkleben abgezogen wird. Der Abdeckstreifen wird durch Förderrollen abgezogen, wobei das Dichtungsband gefördert wird.

Mit derartigen Anlagen können die Dichtungsbänder oder Dichtungsprofile von einer Vorratsrolle appliziert und abgelängt werden. Es können darüber hinaus verschiedene Bauteile mit unterschiedlichen Konturen nacheinander mit dem Dichtungsband beklebt werden, ohne aufwändige Umstellungen an der Anlage vornehmen zu müssen.

Gemäß der DE 36 07 418 erfolgt die Anpassung der Fördergeschwindigkeit der Bandaufklebevorrichtung an die Bahngeschwindigkeit des Roboter geführten Bauteils mit einer Steuerungseinheit, welche beispielsweise in Abhängigkeit von der Drehzahl der Antriebseinheit der Förderrollen ein Signal zur Steuerung der Bahngeschwindigkeit liefert.

Gemäß der DE 103 42 658 A1 wird das Dichtungsband bevorratet bereit gestellt, sodass unterschiedliche Bahngeschwindigkeiten des Bauteils beim Auftragen des Klebebandes durchlaufen werden können, ohne dass eine Abstimmung mit der Fördergeschwindigkeit notwendig ist.

Aus der Schrift DE 103 16 265 A1 ist ein weiteres Verfahren zum Aufbringen von Klebebandabschnitten auf eine Oberfläche bekannt, bei dem eine bandförmige Dichtung mittels eines Auftragsrades auf eine Oberfläche aufgebracht wird. Dabei wird dort das Auftragsrad von einem Antriebsmotor angetrieben, der seinerseits von einem Steuermodul angesteuert wird, welches dabei die Drehzahl des Auftragsrades in Abhängigkeit von Umgebungsparametern steuert.

Eine derartige Zuführung und/oder Steuerung ist für weiche und elastische Dichtungen kritisch, da es beim Auftragen der Dichtungsbänder zu unerwünschten Zugspannungen kommen kann, wodurch die Dichtungsbänder sich wieder lösen können.

Die Aufgabe der Erfindung besteht daher darin die Verklebungsqualität zwischen Bauteil und Dichtung mit einfachen Mitteln zu verbessern.

Die Aufgabe wird erfindungsgemäß durch ein Verfahren gemäß Anspruch 1 und mit einer Vorrichtung gemäß Anspruch 20 gelöst. Weitere vorteilhafte Ausführungsformen sind den Unteransprüchen zu entnehmen.

Gemäß des erfindungsgemäßen Verfahren zum Aufbringen einer Dichtung auf eine Oberfläche eines Bauteils, insbesondere auf die Oberfläche eines Karosseriebauteils, mittels einer Applikationsrolle wird die Dichtung zwischen die Applikationsrolle und die Oberfläche des Bauteils angeordnet und die Dichtung mittels einer Fördereinrichtung in Richtung der Applikationsrolle gefördert, wobei das Bauteil und die Applikationsrolle mit einer Relativgeschwindigkeit zueinander unter Aufbringung einer Andruckkraft auf die Dichtung bewegt werden. Die Applikationsrolle wird dabei mittels einer Antriebseinheit angetrieben, wobei über die Ansteuerung der Antriebseinheit in vorteilhafter Weise das Drehmoment der Applikationsrolle gesteuert wird.

In einer vorteilhaften Ausführung des Verfahrens wird als Dichtung ein selbstklebendes Dichtungsband oder ein selbstklebendes Dichtungsprofil verwendet, dessen Klebfläche mit einem Abdeckband versehen ist, wobei das Abdeckband vor dem Aufkleben abgezogen wird. Dadurch entfallen weitere Maßnahmen, beispielsweise das zusätzliche Auftragen von Klebstoff auf die Klebeseite der Dichtung und/oder auf die Oberfläche des Bauteils, zur Befestigung der Dichtung am Bauteil.

In einer weiteren vorteilhaften Ausführung des Verfahrens wird die Fördergeschwindigkeit, mit welcher die Dichtung gefördert wird, in Abhängigkeit von der Relativgeschwindigkeit gesteuert, so dass durch die Fördereinrichtung genügend Dichtung zum Aufbringen auf das Bauteil bereitgestellt werden kann. Dabei sind Fördereinrichtung und Applikationsrolle in einer festen Position zueinander angeordnet.

Vorzugsweise wird die Dichtung mittels Förderrollen der Fördereinrichtung gefördert, wobei die Dichtung zwischen zwei Förderrollen angeordnet ist und durch die gegenläufige Bewegung der Förderrollen die Dichtung gefördert wird.

Alternativ ist auch eine Förderung der Dichtung möglich, in dem das Abzugsband der Dichtung mittels der Förderrollen abgezogen und dadurch die Dichtung mitgezogen und gefördert wird.

Vorzugsweise werden die zwei Förderrollen der Fördereinrichtung synchron angetrieben. Dadurch wird die Kraftübertragung bei der Förderung der Dichtung verbessert. Durch den synchronen Antrieb wird außerdem der Schlupf vermindert und ein konstanterer Vorschub der Dichtung gewährleistet, so dass die Prozessparameter stabiler werden. Ein synchroner Antrieb der Förderrollen kann insbesondere mit einem Stirnradgetriebe realisiert werden.

In einer weiteren vorteilhaften Ausgestaltung der Erfindung wird die Bewegung des Bauteils mittels eines Roboters ausgeführt, welcher vorzugsweise um sechs Gelenkachsen bewegbar ist. Mittels des Roboters wird insbesondere die Oberfläche des Bauteils, auf welche die Dichtung aufgebracht werden soll, an der Applikationsrolle vorbei geführt. Die daraus resultierende Relativgeschwindigkeit zwischen Bauteil und Applikationsrolle, welche bei einer stationären Anordnung der Applikationsrolle der Bahngeschwindigkeit des Bauteils entspricht, kann dabei vorzugsweise von einer Steuerungseinheit, welche die Bewegung des Roboters steuert, ermittelt werden. Die Steuerungseinheit umfasst Hardware und Systemsoftware, mit welcher der Roboter in Abhängigkeit einer von einer vorgegebenen Sollbewegung und Messgrößen derart angesteuert wird, dass dieser die durch die Programme vorgegebenen Bewegungsvorgänge ausführen kann.

Die ermittelte Relativgeschwindigkeit wird vorzugsweise dazu genutzt, um die Drehgeschwindigkeit der Applikationsrolle und/oder Förderrollen der Fördereinrichtung proportional zur Relativgeschwindigkeit einzustellen.
In einer bevorzugten Ausführung der Erfindung wird mittels der Steuerungseinheit die Steuerung der Bewegung des Bauteils mit der Steuerung der Applikationsrolle und der Förderrollen gekoppelt, wobei ein 8-achsiges Modell verwendet, bei welchem in Abhängigkeit von der über sechs Achsen gesteuerten Bewegung des Bauteils und weiteren Prozessparametern die auf einer siebenten Achse festgelegte Drehung der Applikationsrolle und auf einer achten Achse festgelegte Drehung einer Förderrolle gesteuert werden.
Bei einer Steuerung der Drehgeschwindigkeit der Applikationsrolle mittels der Antriebseinheit kann die durch die Andruckkraft der Applikationsrolle, die für das Aufbringen der Dichtung notwendig ist und durch die Umlenkung verursachte Dehnung der Dichtung vorzugsweise dadurch kompensiert werden, dass die Applikationsrolle mit einer höheren Geschwindigkeit als die Relativgeschwindigkeit betrieben wird, wobei durch die dabei entstehenden Reibungskräfte zwischen der Dichtung und der Applikationsrolle die Dehnung der Dichtung durch Stauchung kompensiert wird. Es ist über die Steuerung der Drehgeschwindigkeit ebenfalls möglich eine definierte Dehnung oder Stauchung der Dichtung einzustellen. Die Antriebseinheit ist dazu vorzugsweise mit der Steuerungseinheit gekoppelt.

Gemäss der Erfindung wird das Drehmoment der Applikationsrolle mittels der Antriebseinheit gesteuert, wobei die Dehnung der Dichtung beim Aufbringen auf das Bauteil gezielt beeinflusst wird. Dabei wird durch Reibung eine bestimmte Kraft auf die aufzubringende Dichtung übertragen, mit welcher eine Dehnung ausgeglichen oder eine bestimmte gewünschte Dehnung bzw. eine gewünschte Stauchung der Dichtung eingestellt werden kann. Bei einer derartigen Antriebssteuerung der Applikationsrolle beeinflussen die Materialparameter der Dichtung den Prozess nicht mehr wesentlich. Die Antriebseinheit ist dazu vorzugsweise mit der Steuerungseinheit gekoppelt. Das aufzubringende Drehmoment wird vorzugsweise durch die Steuerungseinheit vorgegeben und kann individuell angepasst werden. Die aufzubringenden Drehmomente können dabei beispielsweise durch Versuche ermittelt werden.

Zur Kontrolle und/oder Optimierung des Prozesses wird in weiterer vorteilhafter Ausgestaltung der Erfindung die Dehnung oder Stauchung der auf das Bauteil aufgebrachten Dichtung ermittelt.

Dazu wird vorzugsweise die Länge eines abgezogenen Teilabschnitts des Abdeckbandes zur Ermittlung der Dehnung oder Stauchung der Dichtung auf einem bestimmten Abschnitt der Oberfläche herangezogen. Dabei wird davon ausgegangen, dass die Länge eines dehnungsfrei abgezogenen Teilabschnitts des Abzugsbandes der Länge des ungedehnten Teilabschnitts der Dichtung gibt, von der der Teilabschnitt des Abdeckbandes abgezogen wurde. Dem besagten Teilabschnitt des Abdeckbandes wird ein Weg auf der Oberfläche des Bauteils zugeordnet, auf den der Teilabschnitt der Dichtung aufgebracht werden soll, aufgebracht wird oder aufgebracht wurde. Dieser Weg hat eine bestimmbare Länge.

Vorzugsweise wird während in einem Zeitintervall der Weg AB auf der Oberfläche des Bauteils mit einer definierten Länge von seinem Anfangspunkt A bis zu seinem Endpunkt B an der Applikationsrolle oder einem anderen definierten Messpunkt vorbeigeführt wird, die in diesem Zeitintervall abgezogene Länge eines Teilabschnitts des Abdeckbandes ermittelt und zur Ermittlung eines Maßes für die Dehnung oder einer Stauchung mit dem Weg der Oberfläche des Bauteils verglichen.

Die Erfindung wird an Hand eines Ausführungsbeispiels weiter erläutert.

### Es zeigen dazu

- Fig. 1: eine schematische Darstellung eines Ausschnitts einer Vorrichtung zum Aufbringen einer Dichtung
- Fig.2: eine Einheit zum Messen der Länge des Abdeckbandes
- Fig. 3: eine Einheit zur Walkerkennung

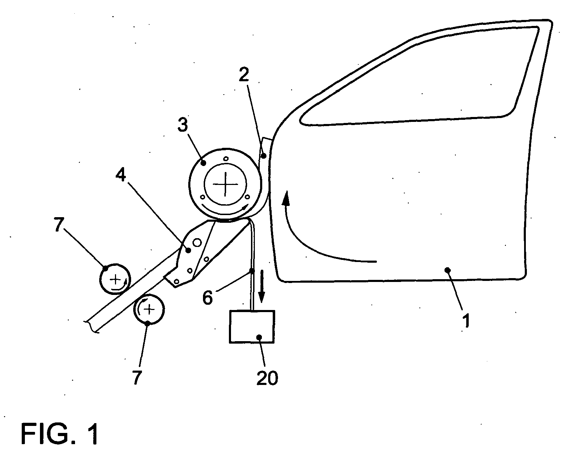

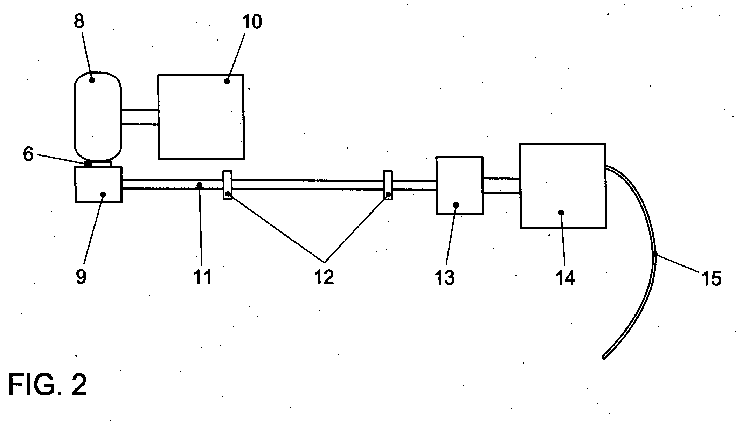

Der in Figur 1 gezeigte Ausschnitt einer Vorrichtung zum Aufbringen eines selbstklebenden Dichtungsprofils 2 auf eine Kfz-Tür 1 ist Teil einer Roboter geführten Anlage. Das Dichtungsprofil 2 wird mittels der Förderrollen 7 und über die Führung 4 in Richtung Applikationsrolle 3 zur Kfz-Tür 1 geführt. Wenn das Dichtungsprofil 2 am Ende der Führung 4 austritt, wird das Abdeckband 6 der Klebfläche des Dichtungsprofils 2 abgezogen und zwischen die Applikationsrolle 3 und die Oberfläche der Kfz-Tür 1 eingelegt. Ein Roboter (nicht dargestellt) führt die mit dem Dichtungsprofil 2 zu beklebende Oberfläche der Kfz-Tür 1 an der Applikationsrolle 3 vorbei und das Dichtungsprofil 2 wird mit seiner Klebfläche mittels der Applikationsrolle 3 gegen die zu beklebende Oberfläche der Kfz-Tür 1 gedrückt, wobei die Kfz-Tür 1 und die Applikationsrolle 3 mit einer Relativgeschwindigkeit zueinander bewegt werden. Die Applikationsrolle 3, die Förderrollen 7 und die Führung 4 sind Bestandteile eines stationären Applikationskopfes, der außerdem noch eine, in Fig. 2 dargestellte, Einheit zur Messung der Länge des Abdeckbandes 6 sowie einen Vorrat des Dichtungsprofils 2 umfasst.

Der Vorrat an Dichtungsprofil 2 kann ein auf das Bauteil abgestimmter Längenabschnitt oder ein auf einer Rolle befindlicher Vorrat einer Dichtung sein.

Der Roboter ist als 6-achsiger Industrieroboter ausgeführt und wird mittels einer Robotersteuerung angesteuert. Das Verfahren beginnt mit der Entnahme der Kfz-Tür 1 aus einem Gehänge. Der Roboter führt dann die Kfz-Tür 1 zum stationären Applikationskopf und führt die Kfz-Tür 1 entsprechend eines in der Robotersteuerung programmierten Bewegungsablaufes an der Applikationsrolle 3 vorbei. Der Applikationskopf 3 ist mit einem ersten Elektromotor zum Antrieb der Förderrollen 7 und einem zweiten Elektromotor zum Antrieb der Applikationsrolle 3 ausgestattet. Die Antriebsachse der Förderollen 7 und die Antriebsachse der Applikationsrolle 3 sind als Zusatzachsen Bestandteile der Robotersteuerung. Die Ansteuerung des ersten und zweiten Elektromotors kann in der Robotersteuerung verschiedensten Vorgaben angepasst werden.

Die Drehgeschwindigkeit der Förderrollen 7 wird direkt proportional zur Relativgeschwindigkeit gesteuert, so dass die Fördergeschwindigkeit des Dichtungsprofils 2 der Relativgeschwindigkeit entspricht. Die Relativgeschwindigkeit, welche im Falle einer stationären Anordnung des Applikationskopfes der Bahngeschwindigkeit des Bauteils entspricht, wird durch die Robotersteuerung ermittelt. Durch einen derartigen geschwindigkeitsgesteuerten Antrieb der Förderrollen 7 wird bei einer Geschwindigkeitsänderung der Relativgeschwindigkeit die Geschwindigkeit der Förderrollen 7 direkt angepasst, wodurch eine Dehnung oder Stauchung des Dichtungsprofil 2 während des Förderns und Aufklebens auf die Kfz-Tür vermieden wird.

Ein spannungsfreies Aufkleben des Dichtungsprofils 2 ist dabei vor allem auf gerade Oberflächen der Kfz-Tür 2 wünschenswert. Hingegen kann bei Innenkrümmungen der Oberfläche eine Stauchung und bei Außenkrümmungen der Oberfläche eine Dehnung des Dichtungsprofils wünschenswert sein, damit es nicht zum Ablösen des Dichtungsprofils 2 kommt. Beim Aufbringen der Dichtung auf derartig gekrümmte Oberflächen kann die Geschwindigkeit der Förderrollen 7 zusätzlich erhöht oder verringert werden, so dass eine gewünschte Dehnung oder Stauchung des Dichtungsprofils 2 ermöglicht wird.

Die angetriebene Applikationsrolle 3 beeinflusst ebenfalls die Spannung des Dichtungsprofils 2 beim Aufkleben auf die Oberfläche der Kfz-Tür 1. Die Applikationsrolle 3 wird dazu über den zweiten Elektromotor mit einem Drehmoment beaufschlagt, so dass auf die Dichtung nicht nur die Andruckkraft der Applikationsrolle 3 wirkt, sondern auch eine definierte zusätzlich gerichtete Kraft zur Dehnung oder Stauchung der Dichtung. Die Vorgabe der Drehmomentwerte erfolgt über die Robotersteuerung.

Das Abdeckband 6 wird mittels einer Abzugseinrichtung von dem Dichtungsprofil 2 abgezogen. Zur Erleichterung des Abziehens kann ein separates zeichnerisch nicht dargestelltes Umlenkelement im Förderweg des Abdeckbandes 6 vorgesehen sein. Bevorzugt dient die Abzugseinrichtung auch als Einrichtung 20 zur Messung der Länge eines von dem Dichtungsprofil 2 abgezogenen Teilabschnitts des Abdeckbandes 6.

In Fig. 2 ist die Einheit 20 zum Messen der Länge des Abdeckbandes genauer dargestellt.

Die Einheit 20 zum Messen einer Länge eines Teilabschnitts des abgezogenen Abdeckbandes 6 umfasst eine Antriebsrolle 8 mit einer Gegenrolle 9 zwischen denen das Abdeckband 6 angeordnet ist. Die Antriebsrolle 8 wird von einem Antriebsmotor 10 in Rotation versetzt. Von der Gegenrolle 9 wird das Abdeckband 6 gegen die Antriebsrolle gedrückt, so dass auf diese ein Moment einwirkt, das zu einem Abziehen des Abdeckbandes von dem Dichtungsprofil 2 führt. Das Moment des Antriebsmotors 10 ist so bemessen, dass ein zuverlässiges Abziehen des Abdeckbandes 6 gewährleistet ist, dieses jedoch nicht oder nicht messbar gedehnt wird. Die Gegenrolle 9 ist mit einer Welle 11, die in Lagern 12 läuft über eine Kupplung 13 mit einem Inkrementalgeber 14 gekoppelt. Die Kupplung 13 ermöglicht die An- oder Abkopplung des Inkrementalgebers 14 an die Gegenrolle 9. Der Inkrementalgeber 14 ist mit einem Verbindungselement 15 mit einem nicht dargestellten Steuergerät, vorzugsweise mit der Robotersteuerung verbunden. Der Inkrementalgeber 14 ist so ausgelegt, dass ein Antrieb mit einem sehr geringen Antriebsmoment möglich ist, so dass zwischen Abdeckband 6 und Gegenrolle 9 beim Antrieb des Inkrementalgebers 14 kein Schlupf stattfindet. Durch Vorwärtszählen des Inkrementalgebers 14 lässt sich, ausgehend von einem Bezugspunkt ein aktueller Positionswert ermitteln, der einer Länge eines Teilabschnitts des Abdeckbandes 6 zugeordnet wird.

Bei Einsatz eines Roboters zur Durchführung des Verfahrens wird das Bauteil, beispielsweise die Kfz-Tür 1 entsprechend des programmierten Bewegungsablaufs an der Applikationsrolle 3 vorbeigeführt. Zur Ermittlung eines Maßes für die Dehnung oder Stauchung eines auf die Oberfläche aufgebrachten Teilabschnitts der Dichtung 2 kann folgendermaßen vorgegangen werden.

Zwei Punkte, A und B auf der Teiloberfläche werden gewählt, zwischen denen ein Weg mit einer definierten Länge L_{AB} liegt. Im Bereich der Applikationsrolle 3 wird ein Referenzpunkt gewählt, beispielsweise mit festem Abstand zur Drehachse der Applikationsrolle 3. Da Bauteil 1 und Applikationsrolle 3 relativ zueinander bewegt werden, wird der Weg von seinem Anfangspunkt A bis zu seinem Endpunkt B an dem relativ zur Applikationsrolle 3 stationären Referenzpunkt vorbeigeführt. Sobald der Punkt A sich im Bereich des Referenzpunkts befindet, wird eine Markierung zur Festlegung eines Bezugspunkts des Inkrementalgebers 14 gesetzt oder der Inkrementalgeber 14 angekoppelt. Sobald der Weg mit seinem Endpunkt B sich im Bereich des Referenzpunkts befindet, wird eine zweite Markierung gesetzt oder der Inkrementalgeber 14 abgekoppelt. Die durch Vorwärtszählung ermittelte Anzahl der Inkremente korreliert zur Länge L eines abgezogenen Teilabschnitts des Abdeckbandes 6. Die Länge L ist ein Maß für die Länge eines Teilabschnitts des Dichtungsprofils 2 im spannungsfreiem Zustand. Die Länge L wird mit der Länge L_{AB} verglichen und liefert ein Maß für die Dehnung oder Stauchung der zwischen den Punkten A und B aufgebrachten Teilabschnitts des Dichtungsprofils 2.

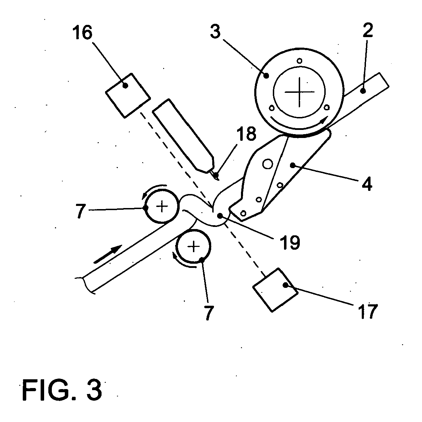

In Figur 3 ist eine Einheit zur Walkerkennung dargestellt. Als Walken wird ein Ausknicken des Dichtungsprofils 2 während der Förderung bezeichnet. Durch das Ausknicken des Dichtungsprofils 2 kann das Abdeckband 6 plastisch deformiert werden und daher seine Länge ändern, so dass die Zuordnung zwischen der Länge eines abgezogenen Teilabschnitts des Abdeckbandes 6 und einem Teilabschnitt des Dichtungsprofils 2 beeinträchtigt wird. Ein Walken kann insbesondere im Bereich zwischen den Förderrollen 7 und der Applikationsrolle 3 auftreten, wenn die Fördergeschwindigkeit mit der das Dichtungsprofil 2 in Richtung der Applikationsrolle 3 transportiert wird, zu groß ist. Zum Erkennen von Walken werden im wesentlichen senkrecht zur Förderrichtung, beispielsweise Lasertaster als Sensoren 16, 17 angeordnet. Bei Auftreten von Walken wird das Lasersignal beeinflusst und ein Fehlersignal ausgelöst, so dass eine manuelle oder automatische Korrektur, beispielsweise durch Verringerung der Drehgeschwindigkeit der Förderrollen 7 vorgenommen werden kann. Bei Auftreten von Walken kann ferner das Dichtungsprofil 2 zusammen mit dem Abdeckband 6 von einem Messer abgeschnitten werden.

### BEZUGSZEICHENLISTE

- 1: Kfz-Tür
- 2: Dichtungsprofil
- 3: Applikationsrolle
- 4: Führung
- 6: Abdeckband
- 7: Förderrollen
- 8: Antriebsrolle
- 9: Gegenrolle
- 10: Antriebsmotor
- 11: Welle
- 12: Lager
- 13: Kupplung
- 14: Inkrementalgeber
- 15: Verbindung
- 16: Sensor
- 17: Sensor
- 18: Messer
- 19: Walk
- 20: Einheit zum Messen der Länge des Abdeckbandes

## Patentansprüche

1. Verfahren zum Aufbringen einer Dichtung (2) auf eine Oberfläche eines Bauteils (1), insbesondere eines Karosseriebauteils, mittels einer Applikationsrolle (3), bei welchem die Dichtung (2) zwischen die Applikationsrolle und die Oberfläche des Bauteils angeordnet wird, die Dichtung (2) mittels einer Fördereinrichtung in Richtung der Applikationsrolle (3) gefördert wird, wobei das Bauteil und die Applikationsrolle (3) mit einer Relativgeschwindigkeit zueinander unter Aufbringung einer Andruckkraft auf die Dichtung (2) bewegt werden, wobei die Applikationsrolle mit einer Antriebseinheit (10) angetrieben wird, **dadurch gekennzeichnet, dass** das Drehmoment der Applikationsrolle (3) mittels der Antriebseinheit (10) gesteuert wird.

2. Verfahren nach Anspruch 1, **dadurch gekennzeichnet, dass** als Dichtung (2) ein selbstklebendes Dichtungsband oder ein selbstklebendes Dichtungsprofil, dessen Klebfläche mit einem Abdeckband (6) versehen ist, verwendet wird.

3. Verfahren nach Anspruch 2, **dadurch gekennzeichnet, dass** das Abdeckband (6) vor dem Aufbringen der Dichtung (2) auf die Oberfläche des Bauteils (1) abgezogen wird.

4. Verfahren nach einem der vorhergehenden Ansprüche, **dadurch gekennzeichnet, dass** die Dehnung der Dichtung (2) beim Aufbringen auf das Bauteil (1) mittels der angetriebenen Applikationsrolle (3) gezielt beeinflusst wird.

5. Verfahren nach einem der vorhergehenden Ansprüche, **dadurch gekennzeichnet, dass** die Drehgeschwindigkeit der Applikationsrolle (3) mittels der Antriebseinheit (10) gesteuert wird.

6. Verfahren nach Anspruch 5, **dadurch gekennzeichnet, dass** mittels der Antriebseinheit (10) eine zur Relativgeschwindigkeit proportionale Drehgeschwindigkeit der Applikationsrolle (3) eingestellt wird.

7. Verfahren nach Anspruch 6, **dadurch gekennzeichnet, dass** mittels der Antriebseinheit (10) die Applikationsrolle (3) mit einem vorgegebenen Drehmoment beaufschlagt wird.

8. Verfahren nach einem der vorhergehenden Ansprüche, **dadurch gekennzeichnet, dass** das Bauteil (1) mit der Relativgeschwindigkeit an der Fördereinrichtung vorbeibewegt wird.

9. Verfahren nach einem der vorhergehenden Ansprüche, **dadurch gekennzeichnet, dass** die Fördergeschwindigkeit, mit welcher die Dichtung (2) gefördert wird, in Abhängigkeit von der Relativgeschwindigkeit gesteuert wird.

10. Verfahren nach einem der vorhergehenden Ansprüche, **dadurch gekennzeichnet, dass** die Dichtung (2) mittels Förderrollen (7) der Fördereinrichtung gefördert wird.

11. Verfahren nach Anspruch 10, **dadurch gekennzeichnet, dass** die Dichtung (2) und/oder das Abdeckband (6) zwischen zwei Förderrollen (7) angeordnet wird, wobei durch eine gegenläufige Bewegung der Förderrollen (7) die Dichtung gefördert wird.

12. Verfahren nach Anspruch 11, **dadurch gekennzeichnet, dass** die zwei Förderrollen (7) synchron angetrieben werden.

13. Verfahren nach einem der Ansprüche 10 bis 12, **dadurch gekennzeichnet, dass** die Drehgeschwindigkeit der Förderrollen (7) gesteuert wird, wobei eine zur Relativgeschwindigkeit proportionale Drehgeschwindigkeit der Förderrollen (7) eingestellt wird.

14. Verfahren nach einem der vorhergehenden Ansprüche, **dadurch gekennzeichnet, dass** das Bauteil (1) mit einem Roboter bewegt wird.

15. Verfahren nach Anspruch 14, **dadurch gekennzeichnet, dass** das Bauteil (1) mit einem Roboter bewegt wird, welcher um sechs Gelenkachsen bewegbar ist.

16. Verfahren nach einem der vorhergehenden Ansprüche, **dadurch gekennzeichnet, dass** die Bewegung des Bauteils (1) relativ zur Position der Applikationsrolle (3) gesteuert wird.

17. Verfahren nach einem der vorhergehenden Ansprüche, **dadurch gekennzeichnet, dass** die Dehnung eines auf das Bauteil (1) aufgebrachten Dichtungsabschnittes ermittelt wird.

18. Verfahren nach Anspruch 17, **dadurch gekennzeichnet, dass** während in einem Zeitintervall ein Weg AB auf der Oberfläche des Bauteils (1) mit einer definierten Länge von seinem Anfangspunkt A bis zu seinem Endpunkt B an der Applikationsrolle (3) oder einem anderen definierten Messpunkt vorbeigeführt wird, die in diesem Zeitintervall abgezogene Länge eines Teilabschnitts des Abdeckbandes ermittelt wird.

19. Verfahren nach Anspruch 18, **dadurch gekennzeichnet, dass** das Abdeckband (6) dehnungsfrei abgezogen wird.

20. Vorrichtung zum Aufbringen einer Dichtung (2) auf eine Oberfläche eines Bauteils (1), insbesondere eines Karosseriebauteils, zumindest umfassend eine Applikationsrolle (3), eine Fördereinrichtung zur Förderung der Dichtung (2) in Richtung der Applikationsrolle (3) sowie eine Steuereinheit mit welcher das Bauteil (1) und die Applikationsrolle (3) mit einer Relativgeschwindigkeit zueinander unter Aufbringung einer Andruckkraft auf die Dichtung (2) bewegbar sind, wobei die Applikationsrolle (3) mit einem Antrieb (10) verbunden ist, **dadurch gekennzeichnet, dass** der Antrieb (10) mit einer Steuerung verbunden ist zur Steuerung des Drehmomentes der Applikationsrolle (3).

## Claims

1. Method for attaching a seal (2) to a surface of a component (1), in particular a vehicle body component, by means of an application roller (3), in which method the seal (2) is arranged between the application roller and the surface of the component, and the seal (2) is conveyed in the direction of the application roller (3) by means of a conveying device, the component and the application roller (3) being moved towards one another at a relative speed with the application of a pressing force to the seal (2), the application roller being driven by way of a drive unit (10), **characterized in that** the torque of the application roller (3) is controlled by means of the drive unit (10).

2. Method according to Claim 1, **characterized in that** a self-adhesive seal tape or self-adhesive seal profile, the adhesive surface of which is provided with a covering tape (6), is used as seal (2).

3. Method according to Claim 2, **characterized in that** the covering tape (6) is pulled off before the seal (2) is applied to the surface of the component (1).

4. Method according to one of the preceding claims, **characterized in that** the elongation of the seal (2) is influenced in a targeted manner by means of the driven application roller (3) during the application to the component (1).

5. Method according to one of the preceding claims, **characterized in that** the rotational speed of the application roller (3) is controlled by means of the drive unit (10).

6. Method according to Claim 5, **characterized in that** a rotational speed of the application roller (3) which is proportional to the relative speed is set by means of the drive unit (10).

7. Method according to Claim 6, **characterized in that** the application roller (3) is loaded with a predefined torque by means of the drive unit (10).

8. Method according to one of the preceding claims, **characterized in that** the component (1) is moved past the conveying device at the relative speed.

9. Method according to one of the preceding claims, **characterized in that** the conveying speed, at which the seal (2) is conveyed, is controlled in a manner which is dependent on the relative speed.

10. Method according to one of the preceding claims, **characterized in that** the seal (2) is conveyed by means of conveying rollers (7) of the conveying device.

11. Method according to Claim 10, **characterized in that** the seal (2) and/or the covering tape (6) are/is arranged between two conveying rollers (7), the seal being conveyed by way of a movement in opposite directions of the conveying rollers (7).

12. Method according to Claim 11, **characterized in that** the two conveying rollers (7) are driven synchronously.

13. Method according to one of Claims 10 to 12, **characterized in that** the rotational speed of the conveying rollers (7) is controlled, a rotational speed of the conveying rollers (7) which is proportional to the relative speed being set.

14. Method according to one of the preceding claims, **characterized in that** the component (1) is moved by way of a robot.

15. Method according to Claim 14, **characterized in that** the component (1) is moved by way of a robot which can be moved about six joint axes.

16. Method according to one of the preceding claims, **characterized in that** the movement of the component (1) is controlled relative to the position of the application roller (3).

17. Method according to one of the preceding claims, **characterized in that** the elongation of a seal section which is applied to the component (1) is determined.

18. Method according to Claim 17, **characterized in that**, while a travel AB on the surface of the component (1) with a defined length from its starting point A as far as its end point B is guided past the application roller (3) or another defined measuring point in a time interval, the pulled-off length of a part section of the covering tape is determined in this time interval.

19. Method according to Claim 18, **characterized in that** the covering tape (6) is pulled off without elongation.

20. Apparatus for applying a seal (2) to a surface of a component (1), in particular a vehicle body component, at least comprising an application roller (3), a conveying device for conveying the seal (2) in the direction of the application roller (3), and a control unit, by way of which the component (1) and the application roller (3) can be moved at a relative speed with respect to one another with the application of a pressing force on the seal (2), the application roller (3) being connected to a drive (10), **characterized in that** the drive (10) is connected to a controller for controlling the torque of the application roller (3).

## Revendications

1. Procédé destiné à l'application d'un joint (2) sur une surface d'un composant (1), notamment d'un composant de carrosserie, au moyen d'un rouleau d'application (3), dans lequel le joint (2) est disposé entre le rouleau d'application et la surface du composant, le joint (2) étant transporté en direction du rouleau d'application (3) au moyen d'un dispositif de transport, le composant et le rouleau d'application (3) étant déplacés à une vitesse relative l'un par rapport à l'autre avec application d'une force de compression sur le joint (2), le rouleau d'application étant entraîné avec une unité d'entraînement (10), **caractérisé en ce que** le couple de rotation du rouleau d'application (3) est commandé à l'aide de l'unité d'entraînement (10).

2. Procédé selon la revendication 1, **caractérisé en ce que** le joint (2) utilisé est une bande de joint autocollante ou un profilé de joint autocollant dont la surface de collage est pourvue d'une bande de recouvrement (6).

3. Procédé selon la revendication 2, **caractérisé en ce que** la bande de recouvrement (6) est retirée avant l'application du joint (2) sur la surface du composant (1).

4. Procédé selon l'une quelconque des revendications précédentes, **caractérisé en ce que** la dilatation du joint (2) est influencée de façon ciblée à l'aide du rouleau d'application (3) entraîné lors de l'application sur le composant (1).

5. Procédé selon l'une quelconque des revendications précédentes, **caractérisé en ce que** la vitesse de rotation du rouleau d'application (3) est commandée à l'aide de l'unité d'entraînement en entrée (10).

6. Procédé selon la revendication 5, **caractérisé en ce qu'**une vitesse de rotation, proportionnelle à la vitesse relative, du rouleau d'application (3) est réglée à l'aide de l'unité d'entraînement (10).

7. Procédé selon la revendication 6, **caractérisé en ce que** le rouleau d'application (3) est sollicité avec un couple de rotation prédéfini à l'aide de l'unité d'entraînement (10).

8. Procédé selon l'une quelconque des revendications précédentes, **caractérisé en ce que** le composant (1) est déplacé en avant à la vitesse relative au niveau du dispositif de transport.

9. Procédé selon l'une quelconque des revendications précédentes, **caractérisé en ce que** la vitesse de transport à laquelle le joint (2) est transporté est commandée en fonction de la vitesse relative.

10. Procédé selon l'une quelconque des revendications précédentes, **caractérisé en ce que** le joint (2) est transporté à l'aide des rouleaux de transport (7) du dispositif de transport.

11. Procédé selon la revendication 10, **caractérisé en ce que** le joint (2) et/ou la bande de recouvrement (6) est disposé entre deux rouleaux de transport (7), le joint étant transporté par un mouvement contraire des rouleaux de transport (7).

12. Procédé selon la revendication 11, **caractérisé en ce que** les deux rouleaux de transport (7) sont entraînés de façon synchrone.

13. Procédé selon l'une quelconque des revendications 10 à 12, **caractérisé en ce que** la vitesse de rotation des rouleaux de transport (7) est commandée, une vitesse de rotation, proportionnelle à la vitesse relative, des rouleaux de transport (7) étant réglée.

14. Procédé selon l'une quelconque des revendications précédentes, **caractérisé en ce que** le composant (1) est déplacé à l'aide d'un robot.

15. Procédé selon la revendication 14, **caractérisé en ce que** le composant (1) est déplacé à l'aide d'un robot pouvant se déplacer autour de six axes d'articulation.

16. Procédé selon l'une quelconque des revendications précédentes, **caractérisé en ce que** le mouvement du composant (1) est commandé par rapport à la position du rouleau d'application (3).

17. Procédé selon l'une quelconque des revendications précédentes, **caractérisé en ce que** la dilatation d'une section de joint appliquée sur le composant (1) est calculée.

18. Procédé selon la revendication 17, **caractérisé en ce que** pendant un intervalle de temps, un tronçon AB situé sur la surface du composant (1) avec une longueur définie de son point de départ A à son point d'arrivée B est guidé en avant au niveau du rouleau d'application (3) ou d'un autre point de mesure défini, la longueur déduite pendant cet intervalle de temps d'une section partielle de la bande de recouvrement étant calculée.

19. Procédé selon la revendication 18, **caractérisé en ce que** la bande de recouvrement (6) est retirée sans dilatation.

20. Dispositif destiné à l'application d'un joint (2) sur une surface d'un composant (1), notamment d'un composant de carrosserie, comprenant au moins un rouleau d'application (3), un dispositif de transport servant au transport du joint (2) en direction du rouleau d'application (3) ainsi qu'une unité de commande avec laquelle le composant (1) et le rouleau d'application (3) peuvent être déplacés à une vitesse relative l'un par rapport à l'autre avec application d'une force de compression sur le joint (2), le rouleau d'application (3) étant relié à un entraînement (10), **caractérisé en ce que** l'entraînement (10) est relié à un élément de commande pour commander le couple de rotation du rouleau d'application (3).
